# EUROPÄISCHE PATENTSCHRIFT

(11) **EP 0 509 276 B1**
(45) Veröffentlichungstag und Bekanntmachung des Hinweises auf die Patenterteilung: **17.09.1997**
(21) Anmeldenummer: 92105082.9
(22) Anmeldetag: 25.03.1992
(51) Int. Cl.: G02F 1/15

(54) **Elektrochromes System**
Electrochromic system
Système électrochromique

(30) Priorität: 12.04.1991 DE 4111944
(43) Veröffentlichungstag der Anmeldung: 21.10.1992
(73) Patentinhaber: SCHÜCO International KG, D-33609 Bielefeld (DE)
(72) Erfinder: Dr.Chu, Wing Fong, W-6000 Frankfurt 90 (DE); Dr.Leonhard, Volker, W-6000 Frankfurt 51 (DE); Hartmann, Rolf, W-6233 Kelkheim (DE); Ganson, Gertraud, W-6370 Oberursel (DE); Prof.Dr.Weppner, Werner, W-7000 Stuttgart 80 (DE)
(74) Vertreter: Stracke, Alexander, Dipl.-Ing.

(56) Entgegenhaltungen:
- WO-A-91/01510
- WO-A-91/02282
- DE-A- 3 629 879
- FR-A- 2 633 609
- US-A- 4 889 414
- MATERIALS RESEARCH BULLETIN Bd. 16, 1981, OXFORD, GB Seiten 1281 - 1289 T. OI ET AL. 'Amorphous Thin Film Ionic Conductors of mLiF.nAlF3'
- PATENT ABSTRACTS OF JAPAN vol. 7, no. 160 (P-210)(1305) 14. Juli 1983 & JP-A-58 068 726 (MATSUSHITA) 23. April 1983
- PROCEEDINGS OF THE S.P.I.E. Bd. 562, 1985, US Seiten 23 - 31 S.F. COGAN ET AL 'Materials and Devices in Electrochromic Window Development'

## Beschreibung

Die Erfindung betrifft elektrochrome Systeme in Form von in einer Atmosphäre, die trocken sein kann, arbeitenden Festkörperschichtanordnungen auf Gläsern oder anderen Substraten zur Regelung des Grades der durch diese Schichtanordnungen hindurchgelassenen Gesamtenergie beispielsweise für Lichtmodulationszwecke. Dabei ist sowohl an Systeme gedacht, bei denen das Substrat durchlässig ist, als auch an solche, bei denen das Substrat oder auch ein Teil der Schichtanordnung reflektierend wirken soll.

Durch die DE-A-36 29 879 sind transparente Gegenelektroden für elektrochrome Anzeigen bekannt. Die bei diesen elektrochromen Einrichtungen verwendete elektrochemische Zelle weist eine erste und zweite Elektrodenschicht auf, zwischen denen eine elektrochrome Materialschicht, eine Elektrolytschicht und eine Oxidbronzeschicht angeordnet ist.

Der in derartigen Systemen ausgenutzte elektrochrome Effekt, der bei etlichen Oxiden von Übergangsmetallen auftritt, ist seit langem bekannt und wird seit geraumer Zeit ausgenutzt. Als elektrochromer Effekt wird im allgemeinen die reversible Ein- oder Entfärbung eines transparenten bzw. farbigen Materials unter dem Einfluß eines elektrischen Stromdurchgangs bezeichnet. Es handelt sich um einen Redoxvorgang in einer elektrochemischen Zelle, in der, abhängig von der Richtung des Stromflusses, eine der Elektroden oxidiert und die andere reduziert wird. Der Ladungstransport in der Zelle erfolgt über den lonentrom in einem die Elektroden voneinander trennenden Elektrolyten. Wie z.B. aus dem Artikel "Advances in Research and Applications of Electrochromic Smart Windows", Solid state lonics 40/41, 1990, Seiten 383-387, von Junichi Nagai hervorgeht, wird dieser Effekt zur Realisierung dynamisch verdunkelbarer Fenster, den sogenannten Smart Windows, in Dünnfilmschichttechnik genutzt.

Der Aufbau einer als Festkörperanordnung realisierten Zelle kann folgendermaßen schematisch beschrieben werden:

Glas |In₂O₃:Sn |WO₃ |Ionenleiter| Gegenelektrode | In₂O₃:Sn.

Das Sn-dotierte Indiumoxid In₂O₃:Sn, genannt ITO, ist ein bekanntes elektrisch leitendes und transparentes Oxid, das standardmäßig als Zuleitungs- oder Kontaktschicht für die elektrochemischen Festkörperzellen eingesetzt wird. Das Wolframoxid WO₃ ist das in der Literatur (z.B. "Electrochromic Coatings for Smart Windows: Crystalline and Amorphous WO₃ Films", Thin Solid Films 126, 1985, Seiten 31-36, von J.S.E.M. Svensson und C.G. Granqvist) meist untersuchte Oxid, das den elektrochromen Effekt zeigt.

Kritische und für die Funktion der Systeme wichtige Elemente sind insbesondere die Gegenelektrode und der Ionenleiter. Beide müssen in Form dünner Filme mit Verfahren wie thermischer Aufdampfung, Sputtern, Sol-Gel-Beschichtung oder Laser-Verdampfung herstellbar sein. Der Ionenleiter soll neben einer guten Ionenleitfähigkeit eine möglichst große Stabilität, insbesondere im Hinblick auf die Koexistenz mit den benachbarten Phasen aufweisen. Für die Gegenelektrode sind zusätzlich zu den genannten fertigungstechnischen Anforderungen die folgenden Bedingungen zu erfüllen:
a) Das Material in Form eines dünnen Films muß in der Lage sein, die Ionen aus dem Ionenleiter reversibel abzugeben und wieder aufzunehmen.
b) Das Material in Form eines dünnen Films soll bei der Ionenabgabe und -aufnahme weitgehend transparent bleiben.
c) Das Material in Form eines dünnen Films muß sowohl elektronenleitend als auch ionenleitend sein.

Die bisher für den Ionenleiter und insbesondere die Gegenelektrode vorgeschlagenen Materialien sind im Hinblick auf diese Anforderungen noch unbefriedigend.

So weist z.B. das in "Lithium Cobalt Oxide Thin Film and its Electrochromism", Proc. Electrochemical Society 2, 1990, Seiten 80-88, von Guang Wei, T.E. Haas und R.B. Goldner als Gegenelektrodenmaterial untersuchte LiCoO₂ den Nachteil auf, selbst ein grundsätzlich störendes, anodisches electrochromes Verhalten zu zeigen.

Beim in der US 4 832 463 als Ionenleitermaterial vorgeschlagenen LiNbO₃ ist es bei der Auftragung durch Sputtern schwierig, die gewünschte Ionenleitfähigkeit zu erhalten.

Der in "Amorphous Thin Film Ionic Conductors of mLiF.nAlF₃", Materials Research Bulletin 16, 1986, Seiten 1281-1289, untersuchte Ionenleiter LiAlF₄ ist bezüglich seiner Phasenstabilität nicht unkritisch.

Im Vergleich zu anderen Festkörper-Elektrolyten wie z.B. MgF₂ haben sich die Li⁺-Ionenleiter als vorteilhafter herausgestellt, weshalb auch der Erfindung ausgehend von einem elektrochromen Festkörpersystem mit Li⁺-Ionenleitung die Aufgabe zugrunde lag, das System in Bezug auf die geforderten Eigenschaften und seine Funktionsfähigkeit und Haltbarkeit allgemein zu verbessern.

Gemäß der im Patentanspruch 1 angegebenen Lösung wird eine entscheidende Verbesserung erzielt, indem als Gegenelektrodenmaterial LiₓTiO_{y} mit den angegebenen Stöchiometrien verwendet wird.

Material dieser Zusammensetzungen zeigt keinen eigenen elektrochromen Effekt. Wie aus einer weiter unten angeführten Untersuchung hervorgeht, ist der Vorgang der Li⁺-Ionenaufnahme und -Abgabe ausreichend reversibel, z.B. bei Li₂Ti0₃ ist gegenüber LiCoO₂ die Ladungstransportkapazität verbessert. Li₂TiO₃ als im Handel erhältliche Chemikalie ist preiswert und kann wie die anderen Zusammensetzungen durch unterschiedliche gängige Verfahren sowie auch unter Anwendung elektrochemischer Titration in der gewünschten Dünnfilmstruktur hergestellt werden.

Durch eine Dotierung des erfindungsgemäß erstmalig für diesen Zweck eingesetzten Materials mit Oxiden oder Fluoriden können die vorhandene Elektronen-Leitfähigkeit und Li⁺-Ionenbeweglichkeit des Materials noch weiter verbessert werden. Auch kann eine Festlegung der Sauerstoffaktivität des Systems hiermit erzielt werden. Grundsätzlich kann das Lithiumtitanat auch andere Verunreinigungen enthalten, die die Eigenschaften gegebenenfalls verbessern oder auch keinen spürbaren Einfluß hierauf haben.

Die Materialien der im zweiten Patentanspruch angegebenen alternativen Lösung eignen sich in vergleichbarer Weise gut für die Verwendung als Gegenelektrodenmaterialien. Die Mischoxide (Li₂O)ₘ(WO₃)ₙ(Sb₂O₃)ₒ und (Li₂O)ₘ(WO₃)ₙ(CeO₂)ₒ mit der gekennzeichneten Stöchiometrie sind als dünne Schichten mit den genannten gängigen Verfahren einschließlich der Titration gut herstellbar und transparent. Die Modulation ist ebenfalls gering, d.h. die Schichten bleiben transparent, wenn ihnen Li⁺-Ionen entzogen werden oder in sie hineingepumpt werden. Die Ladungstransportkapazität ist gut und der Transportmechanismus ist ebenfalls ausreichend reversibel.

Übliche Verunreinigungen und gegebenenfalls Dotierungen sind möglich.

Die erfindungsgemäßen Gegenelektroden sind grundsätzlich mit dem bekannten Ionenleiter LiAlF₄ oder auch anderen lithiumleitenden Festelektrolyen, z.B. in Form fester Lösungen aus Li₄Si0₄ und Li₃P0₄ verwendbar. Jedoch ist eine Kombination mit dem vorgeschlagenen Li₃AlF₆ Ionenleitermaterial vorzuziehen. Die spezifische ionische Leitfähigkeit von Li₃AlF₆ ist zwar gegenüber LiAlF₄ geringer, jedoch ergibt sich trotz dieses einer Verwendung als Ionenleiter entgegenstehenden Aspekts, daß dieses Material dennoch mit gutem Erfolg einsetzbar ist, da die Schichten mit einer Dicke im Bereich von etwa 150 bis 250 nm so dünn sind, daß eine völlig ausreichende Ionenleitfähigkeit vorliegt.

Infolge einer gegenüber LiAlF₄ andersartigen Kristallstruktur wird eine größere Phasenstabilitätsbreite erzielt, so daß das Li₃AlF₆ ein stabiles Ionenleitermaterial für den vorliegenden Zweck darstellt. Zudem ist es verdampfbar und bietet den Vorteil, ohne kritische Einschränkungen durch die genannten konventionellen Verfahren in Form einer dünnen Schicht herstellbar zu sein.

Das erfindungsgemäße System weist ferner vorzugsweise MgF₂-Schichten als Haftvermittler und Schutzschichten gegen Feuchtigkeit auf beiden Seiten des ionenleitenden Festkörperelektrolyten auf.

Im folgenden wird die Erfindung anhand der Zeichnungen näher erläutert. Es zeigen:
- Fig. 1: ein Ausführungsbeispiel des erfindungsgemäßen Systems und
- Fig. 2: ein Strom/Spannungsdiagramm, das das reversible Verhalten der Li-Ionenabgabe und -aufnahme der Gegenelektrode im erfindungsgemäßen System zeigt.

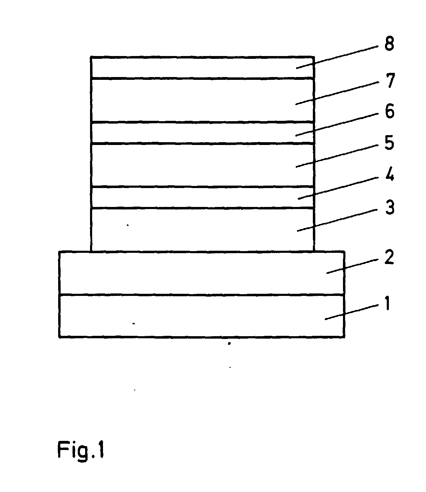

Das in Fig.1 skizzierte erfindungsgemäße System umfaßt dünne Filme 2 bis 8, die auf einem Glasträger 1 übereinander geschichtet sind. Hierzu sind bekannte Verfahren wie Aufdampfen, Sputtern, Sol-Gel-Beschichtung oder Laser-Verdampfung ohne Einschränkung anwendbar.

Das elektrochrome System ist in bekannter Weise mit einer oberen 7 und einer unteren 2 (auf dem Glasträger) transparenten, leitfähigen ITO-Kontaktschicht versehen, die im Ausführungsbeispiel etwa 150 nm dick sind. Als die eigentliche elektrochrom aktive Schicht dient eine etwa 400 nm dicke WO₃- Schicht. Diese ist über eine Magnesiumfluorid-Haftschicht 4 von etwa 10 nm Dicke mit einer Festelektrolytschicht 5 aus Li₃AlF₆ von etwa 200 nm Dicke versehen. Eine weitere Magnesiumfluorid-Haftschicht 6 als Haftvermittler und Schutzschicht gegen Feuchtigkeit von wiederum etwa 10 nm Dicke verbindet die Schicht 5 mit einer Mischoxidgegenelektrode 7 aus LiₓTiO_{y} von etwa 900 nm Dicke, auf der die abschließende ITO-Kontaktschicht 8 aufgebracht ist.

Zur Herstellung der erfindungsgemäßen Elektrolytschicht 5 werden LiF₃ und AlF₃ im Molverhältnis 1:3 eingesetzt, um das Lithiumaluminiumfluorid Li₃AlF₆ zu gewinnen, das eine breite Phasenstabilität aufweist und verdampfbar ist. Dies erfolgt auf eine entsprechend vorgegebene und prinzipiell bekannte Weise des jeweils angewandten Verfahrens zum Auftragen der Schicht. So wird z.B. eine Mischung aus LiF und AlF₃ im Molverhältnis in einer Vakuumanlage aufgedampft.

Die erfindungsgemäße LiₓTiO_{y}-Schicht 7 kann entweder direkt aus Li₂TiO₃-Quellmaterial oder durch elektrochemische Titration aus einer TiO₂-Schicht hergestellt werden. Bei der Methode der elektrochemischen Titration wird zunächst eine TiO₂-Schicht mit einer der obigen Dünnschichttechniken auf einem mit einer ITO-Kontaktschicht beschichteten Glassubstrat 1 aufgebracht. Anschließend wird Lithium in die TiO₂-Schicht elektrisch hineintitriert. Hierzu wird eine elektrochemische Zelle mit einem flüssigen Elektrolyten, wie beispielsweise LiClO₄ in Propylencarbonat, und einer Pt-Elektrode mit folgendem Zellenaufbau vorgesehen:

⊖ Pt | ITO | TiO₂ | LiClO₄ in Propylencarbonat | Pt ⊕.

Durch Anlegen einer Spannung an die Platinelektroden werden Li⁺-Ionen in die TiO₂-Schicht transportiert und es bildet sich bei Sauerstoffaufnahme z.B. aus der Atmosphäre das LiₓTiO_{y}, das die eingangs erwähnten Anforderungen für ein Gegenelektrodenmaterial erfüllt. Die übrigen Schichten können dann durch beliebige Verfahren aufgebracht werden.

Darüberhinaus ist es möglich, diese Gegenelektrodenschicht 7 zusätzlich mit Oxiden und/oder Fluoriden wie SrO, MgO, CeO₂, SnO₂, Sb₂O₃, Nb₂O₃, AlF₃, CeF₃ und LiF zu dotieren. Durch Dotierung mit Stoffen dieser Art können die elektronische Leitfähigkeit und die Li⁺-Ionenbeweglichkeit weiter gesteigert werden. Außerdem kann mit einer solchen Dotierung die Sauerstoffaktivität des Systems festgelegt werden. Die angegebenen Materialien können auch als zweite Phase vorliegen. Wie bei der Dotierung kann es auch hierbei zu einer erhöhten chemischen Diffusion kommen.

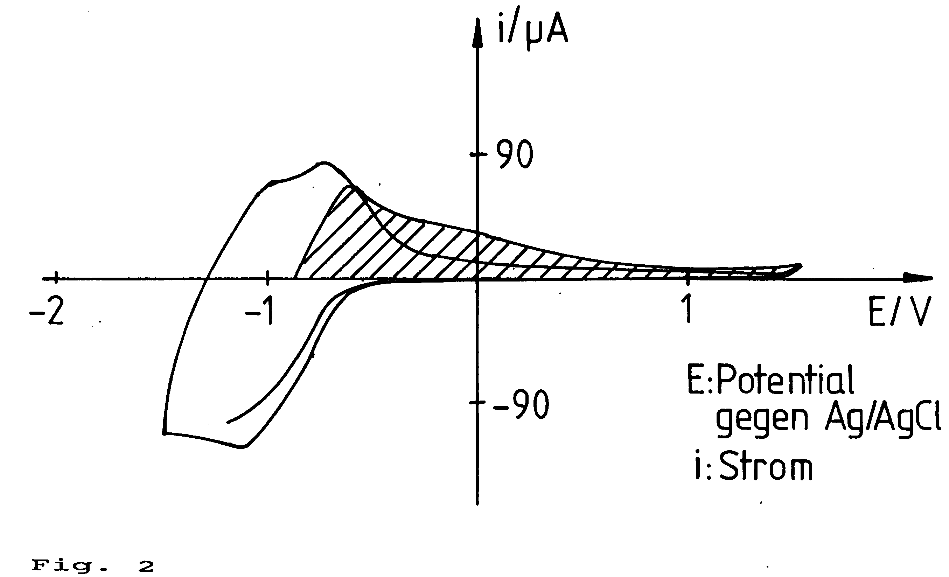

Die Fig.2 zeigt das Ergebnis einer potentiodynamischen Messung zur Untersuchung des reversiblen Verhaltens des verwendeten Gegenelektroden-Schichtmaterials an einer elektrochemischen Zelle mit einem flüssigen Elektrolyten aus LiClO₄ in Propylencarbonat, einer Ag/AgCl-Referenzelektrode und einer Pt-Gegenelektrode mit dem Aufbau:

Glas | ITO | Li₂TiO₃ | LiClO₄ in PC | Pt.

Aufgetragen ist der bei einem angelegten Potential E gegen die Ag/AgCl-Referenzelektrode gemessene Strom. Der Stromfluß entspricht je nach Spannungspolung dem Vorgang einer Li⁺-Ionenabgabe oder -aufnahme. Aus dem Diagramm geht hervor, daß die beiden Vorgänge ausreichend reversibel sind. Ferner wurde bei den Untersuchungen ermittelt, daß stets ein ausreichender primärer Ladungstransport (aus schraffierter Fläche) größer 20 mC/cm² vorlag.

Die im Zusammenhang mit Fig.1 angegebenen Schichtdicken sind nicht notwendigerweise einzuhalten, sondern können in weiten Grenzen geändert werden. Dabei sollte darauf geachtet werden, daß die Elektrolytschicht 5 im Hinblick auf die Ionenleitfähigkeit nicht zu dick wird. Dies wird mit einem Schichtdickenbereich zwischen etwa 150 bis 250 nm gewährleistet. Sehr viel dünnere Schichten können zu Kurzschlußeffekten führen.

Ferner ist es möglich, die ITO-Kontaktschicht 8 statt der entsprechenden Schicht 2 auf dem Glasträger vorzusehen. WO₃ ist als elektrochrom wirkendes Material vorzugsweise zu verwenden, jedoch nicht zwingend einzusetzen. Andere Materialien wie Mo0₃, Iᵣ0₂ und V₂0₅ sind in Verbindung mit den erfindungsgemäßen Schichten 7 und 5 denkbar.

Statt Glas kann jedes andere, auch farbige Substrat verwendet werden. So kann ausgenutzt werden, daß im entfärbten Zustand der Schichtanordnung die farbige Unterlage sichtbar ist, wogegen diese durch Verfärbung der elektrochromen Schicht abgedeckt wird. Dieser Effekt kann für flache Bildschirme oder großformatige Anzeigetafeln ausgenutzt werden.

Im Ausführungsbeispiel wurde vom kommerziell erhältlichen Li₂Ti0₃ ausgegangen, jedoch sind auch die anderen stöchiometrischen Zusammensetzungen gemäß Anspruch 1 bzw. die anderen Materialien gemäß Anspruch 2 mit gleichen Verfahren aufbringbar.

## Patentansprüche

1. Elektrochromes System in Form einer Festkörperschichtanordnung auf einem Substrat mit einer Elektrode, einer elektrochromen Schicht, einer Li⁺-Ionen leitenden Schicht als Festelektrolyt und einer Gegengelektrode, **dadurch gekennzeichnet**, daß die Gegenelektrodenschicht (7) aus LiₓTiO_{y} mit 0,36 ≤ x ≤ 2 und 1,8 ≤ y ≤ 3 besteht und bei lonenabgabe und lonenaufnahme weitgehend transparent bleibt.

2. Elektrochromes System in Form einer Festkörperschichtanordnung auf einem Substrat mit einer Elektrode, einer elektrochromen Schicht, einer Li⁺-Ionen leitenden Schicht als Festelektrolyt und einer Gegenelektrode, **dadurch gekennzeichnet**, daß die Gegenelektrodenschicht aus (Li₂O)ₘ(WO₃)ₙ(Sb₂O₃)ₒ oder (Li₂O)ₘ(WO₃)ₙ(CeO₂)ₒ mit 0,3 ≤ m ≤ 0,49, 0,21 ≤ n ≤ 0,38 und 0,26 ≤ o ≤ 0,43 besteht und bei lonenabgabe und lonenaufnahme weitgehend transparent bleibt.

3. System nach Anspruch 1, dadurch gekennzeichnet, daß die Gegenelektrodenschicht (7) mit Oxiden und/oder Fluoriden dotiert oder verunreinigt ist.

4. System nach Anspruch 3, dadurch gekennzeichnet, daß die Dotierungs- bzw. Verunreinigungsmaterialien ausgewählt sind aus SrO, MgO, CeO₂, SnO₂, Sb₂O₃, Nb₂O₃, AlF₃, CeF₃ und LiF.

5. System nach einem der vorhergehenden Ansprüche,
dadurch gekennzeichnet,
daß die Li⁺-Ionen leitende Schicht (5) aus Li₃AlF₆ besteht.

6. System nach einem der vorhergehenden Ansprüche,
dadurch gekennzeichnet,
daß eine Schicht (4,6) aus MgF₂ auf der Ober -und Unterseite der Li⁺-Ionen leitenden Schicht (5) zu deren Anbindung an die elektrochrom wirkende Schicht (3) und die Gegenelektrodenschicht (7) vorgesehen ist.

7. System nach einem der vorhergehenden Ansprüche,
dadurch gekennzeichnet,
daß die elektrochrom wirkende Schicht (3) aus WO₃ besteht.

8. System nach einem der vorhergehenden Ansprüche,
dadurch gekennzeichnet,
daß die Schichten (3 bis 7) des Systems einschließlich üblicher Kontaktschichten (2,8) mit bekannten Verfahren wie thermischer Aufdampfung, Sputtern, Sol-Gel-Beschichtung oder Laser-Verdampfung aufgebrachte Schichten sind.

9. System nach einem der Ansprüche 1 bis 7,
dadurch gekennzeichnet,
daß die Gegenelektrodenschicht (7) eine mittels elektrochemischer Titration hergestellte Schicht ist.

## Claims

1. An electrochromic system in the form of a solid-state layer arrangement on a substrate having an electrode, an electrochromic layer, a Li⁺-ion-conducting layer as a solid electrolyte and a counter-electrode characterised in that the counter-electrode layer (7) comprises LiₓTiO_{y} with 0.36 ≤ x ≤ 2 and 1.8 ≤ y ≤ 3 and remains substantially transparent upon ion emission and ion absorption.

2. An electrochromic system in the form of a solid-state layer arrangement on a substrate having an electrode, an electrochromic layer, a Li⁺-ion-conducting layer as a solid electrolyte and a counter-electrode, characterised in that the counter-electrode layer comprises (Li₂O)ₘ(WO₃)ₙ(Sb₂O₃)ₒ or (Li₂O)ₘ(WO₃)ₙ(CeO₂)ₒ with 0.3 ≤ m ≤ 0.49, 0.21 ≤ n ≤ 0.38 and 0.26 ≤ o ≤ 0.43 and remains substantially transparent upon ion emission and ion absorption.

3. A system according to claim 1 characterised in that the counter-electrode layer (7) is contaminated or doped with oxides and/or fluorides.

4. A system according to claim 3 characterised in that the doping or impurity materials are selected from SrO, MgO, CeO₂, SnO₂, Sb₂O₃, Nb₂O₃, AlF₃, CeF₃ and LiF.

5. A system according to one of the preceding claims characterised in that the Li⁺-ion-conducting layer (5) comprises Li₃AlF₆.

6. A system according to one of the preceding claims characterised in that there is provided a layer (4, 6) of MgF₂ on the top and bottom sides of the Li⁺-ion-conducting layer (5) for bonding same to the electrochromically operative layer (3) and the counter-electrode layer (7).

7. A system according to one of the preceding claims characterised in that the electrochromically operativelayer (3) comprises WO₃.

8. A system according to one of the preceding claims characterised in that the layers (3 to 7) of the system including usual contact layers (2, 8) are layers applied by known processes such as thermal vapour deposition, sputtering, sol gel-coating or laser evaporation.

9. A system according to one of claims 1 to 7 characterised in that the counter-electrode layer (7) is a layer produced by means of electrochemical titration.

## Revendications

1. Système électrochromique sous la forme d'un ensemble de couches de corps solides sur un substrat avec une électrode, une couche électrochromique, une couche conductrice d'ions Li⁺ en tant qu'électrolyte solide et une contre-électrode, caractérisé en ce que la couche de contre-électrode (7) est constituée de LiₓTiO_{y} avec 0,36 ≤ x ≤ 2 et 1,8 ≤ y ≤ 3 et reste largement transparente en cas d'émission d'ions et d'absorption d'ions.

2. Système électrochromique sous la forme d'un ensemble de couches de corps solides sur un substrat avec une électrode, une couche électrochromique, une couche conductrice d'ions Li⁺ en tant qu'électrolyte solide et une contre-électrode, caractérisé en ce que la couche de contre-électrode est constituée de (Li₂O)ₘ(WO₃)ₙ(Sb₂O₃)ₒ ou (Li₂O)ₘ(WO₃)ₙ(CeO₂)ₒ avec 0,3 ≤ m ≤ 0,49, 0,21 ≤ n ≤ 0,38 et 0,26 ≤ o ≤ 0,43 et reste largement transparente en cas d'émission d'ions et d'absorption d'ions.

3. Système selon la revendication 1, caractérisé en ce que la couche de contre-électrode (7) est dopée ou polluée avec des oxydes et/ou des fluorures.

4. Système selon la revendication 3, caractérisé en ce que les matières de dopage ou d'impuretés sont choisies parmi SrO, MgO, CeO₂, SnO₂, Sb₂O₃, Nb₂O₃, AlF₃, CeF₃ et LiF.

5. Système selon l'une des revendications précédentes, caractérisé en ce que la couche (5) conductrice d'ions Li⁺ est en Li₃AlF₆.

6. Système selon l'une des revendications précédentes, caractérisé en ce qu'une couche (4, 6) en MgF₂ est prévue sur la face supérieure ou la face inférieure de la couche (5) conductrice d'ions Li⁺ en vue de sa liaison avec la couche (3) agissant de manière électrochromique et la couche de contre-électrode (7).

7. Système selon l'une des revendications précédentes, caractérisé en ce que la couche (3) agissant de manière électrochromique est en WO₃.

8. Système selon l'une des revendications précédentes, caractérisé en ce que les couches (3 à 7) du système, y compris les couches usuelles (2, 8), sont des couches appliquées avec des procédés connus tels qu'évaporation thermique, pulvérisation, enduction sol-gel ou évaporation laser.

9. Système selon l'une des revendications 3 à 7, caractérisé en ce que la couche de contre-électrode (7) est une couche réalisée par titrage électrochimique.
